# EUROPEAN PATENT APPLICATION

(11) **EP 4 525 318 A1**
(43) Date of publication of application: **19.03.2025**
(21) Application number: 24196521.9
(22) Date of filing: 26.08.2024
(51) Int. Cl.: H04B 5/79, H04B 5/77, H02J 50/00

(54) **METHOD AND APPARATUS TO IDENTIFY PRESENCE OF A NEAR FIELD COMMUNICATION (NFC) CARD OR INTERFERENCE FROM A POLLER OR LISTENER OF A MULTIPLE POLLER NFC WIRELESS CHARGING SYSTEM**

(30) Priority: 13.09.2023 IN 202341061485
(71) Applicant: NXP B.V., 5656 AG Eindhoven (NL)
(72) Inventor: Ahammed, Anish, 5656AG Eindhoven (NL); Desai, Jayaprakash, 5656AG Eindhoven (NL)
(74) Representative: Krott, Michel

(57) **Abstract**

Wireless charging comprises halting a listener from responding to communication from a poller, wherein the poller and the listener form a charging pair. The poller then transmits a plurality of requests in response to halting the communication with the listener and receives a corresponding response to the plurality of requests. At least one corresponding response to the plurality of requests is received and a number of bits in the received response which is in error compared an expected bit sequence of a response to a transmitted request is counted. A determination is made whether a near field communication (NFC) card is in proximity to the wireless charger based on the count of the number of bits and the wireless charging is performed based on the determination.

## Description

### FIELD OF USE

This disclosure generally relates to near field communication (NFC), and more particularly to identifying presence of an NFC card or interference from a poller or listener of a multiple poller NFC wireless charging system.

### BACKGROUND

A wireless charging system relies on a wireless charging transmitter referred to as a poller and a wireless charging receiver referred to as a listener. The listener is coupled to a battery and device circuitry, where the listener, battery, and the device circuitry forms a device such as earbuds, virtual reality glasses, etc. The wireless charging system could include a plurality of pollers and a plurality of listeners to facilitate wireless charging. The poller transmits a wireless charging signal and the listener receives the wireless charging signal and uses the signal to charge the battery. Near field communication (NFC) technology is a short-range wireless technology that facilitates wireless communication between NFC-compliant devices such an NFC card in addition to wireless charging. A wireless charging system which implements NFC technology typically detects presence of the NFC card before or during wireless charging and stops wireless charging based on this detection to prevent damage to the NFC card or wireless charging system.

### BRIEF DESCRIPTION OF THE DRAWINGS

FIG. 1 illustrates an example near field communication (NFC) wireless charging system in accordance with an embodiment.
FIG. 2 is an example flow chart of functions associated with polling for foreign object detection in accordance with an embodiment.

The drawings are for the purpose of illustrating example embodiments, but it is understood that the embodiments are not limited to the arrangements and instrumentality shown in the drawings.

### DETAILED DESCRIPTION

The detailed description of the appended drawings is intended as a description of the various embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

A near field communication (NFC) wireless charging system which also performs NFC communication is typically arranged to detect presence of a foreign object such as a near field communication (NFC) card before or during wireless charging and stop wireless charging based on this detection. But sometimes the wireless charging system falsely detects an NFC card and stops wireless charging. For example, a poller of the wireless charging system might detect interference from another poller or a listener in the wireless charging system as presence of an NFC card and stop wireless charging. The false detection results in reduced charging efficiency of wireless devices being charged by the wireless charging system.

Embodiments disclosed herein are directed to a poller in an NFC wireless charging system distinguishing interference from another poller or listener in the wireless charging system compared to presence of a foreign object such as an NFC card that would result in the wireless charging stopping. The interference from the poller or listener should not substantially affect the wireless charging compared to presence of the foreign object such the NFC card which would affect the wireless charging. A poller uses a plurality of polling commands to detect presence of an NFC card or interference from a poller or listener and based on a response (or lack thereof) to the polling commands, the NFC wireless charging system is able to distinguish interference from a poller or listener from presence of an NFC card. If the interference is from the poller or listener, then the wireless charging is not stopped so that charging efficiency is not reduced while if an NFC card is detected, the wireless charging is either stopped or a wireless charging power is reduced. Well known instructions, protocols, structures, and techniques have not been shown in detail in order not to obfuscate the description.

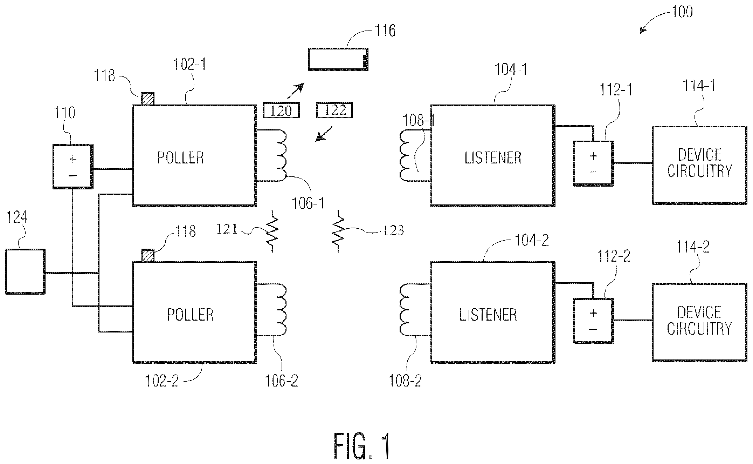

FIG. 1 illustrates an example wireless charging system 100 in accordance with an embodiment. The wireless charging system 100 may be based on Wireless Charging Technical Specification Version 2.0 defined by NFC Forum in an example. The wireless charging system 100 may be used to charge a battery of devices such as earbuds, wireless devices, or virtual reality glasses in an example. The system 100 may have a plurality of pollers 102 and listeners 104, and the system 100 is illustrated as having two pollers 102-1, 102-2 and two listeners 104-1, 104-2 in this example and be a dual poller system. A poller may be a wireless charging transmitter which generates an electromagnetic signal and a listener may be a wireless charging receiver which receives the electromagnetic signal. The poller and the listener may have a respective antenna 106, 108. Further, the poller may be coupled to a power source 110 to power the poller and the listener may also be coupled to a respective battery 112. For example, listener 104-1 may be coupled to battery 112-1 and listener 104-2 may be coupled to battery 112-2. A respective device circuitry 114 such as circuity for earbuds, wireless devices, or virtual reality glasses may also be coupled to the respective battery 112 and be powered by the respective battery 112. For example, device circuitry 114-1 may be coupled to battery 112-1 and device circuitry 114-2 may be coupled to battery 112-2. The controller 124 may be processing circuitry for performing functions associated with the wireless charging. Further, the listener 104-1, battery 112-1, and device circuitry 114-1 may be define a wireless device and the listener 104-2, battery 112-2, and device circuitry 114-2 may define another wireless device. In an example, the system 100 and components thereof may be implemented by one or more of analog circuitry, mix signal circuitry, memory circuitry, logic circuitry, and processing circuitry that executes code that when executed by the processing circuitry performs the disclosed functions, among other implementations. Further, reference to poller 102, antenna 106, antenna 108, battery 112, and device circuity 114 as described herein where not specifically identified by a "-1" or "-2" designation may refer to one instance or a plurality of instances of the respective poller, antenna, battery, and device circuitry depending on context and is not limited to reference only to a singular or plurality.

The poller 102-1 may generate an electromagnetic signal which is transmitted by the antenna 106-1 of the poller 102-1 and received by the antenna 108-1 of the listener 104-1. Similarly, the poller 102-2 may generate an electromagnetic signal which is transmitted by the antenna 106-2 of the poller 102-2 and received by the antenna 108-2 of the listener 104-2. The poller-102-1 and listener 104-1 may be a charging pair to charge battery 112-1 and the poller-102-2 and listener 104-2 may be another charging pair to charge battery 112-2. In this arrangement, poller-102-1 is typically not used to perform wireless charging with listener 104-2 and poller-102-2 is typically not used to perform wireless charging with listener 104-1.

In an example, the poller and listener may exchange signals during the wireless charging process. For example, the poller 102-1 may transmit an analog ping to the listener to detect presence of a wireless device to be charged. The analog ping may be generated by a modulation process. The poller 102-1 may have driving circuit and a resonant circuit. In an example, the driving circuit in the poller 102-1 may signal the resonant circuit in the poller 102-1 to generate an electromagnetic signal with a predetermined magnitude and phase indicative of the analog ping which is transmitted. The resonant circuit may transmit the electromagnetic signal via the antenna 106-1 of the poller 102-1. Presence of the listener 104-1 may cause a resonant circuit of the listener 104-1 to induce an electromagnetic signal which is detected in the poller 102-1. A predetermined phase and magnitude of the induced electromagnetic signal in the poller 102-1 may indicate presence of the wireless device for charging. The poller 102-1 may also communicate with the listener 104-1. The poller 102-1 may transmit an electromagnetic signal such as a digital ping which induces an electromagnetic signal in the resonant circuit in the listener 104-1. The listener 104-1 may detect the induced electromagnetic signal and send a response to the digital ping such a signal strength packet or request to adjust a charging power. A driving circuit of the listener 104-1 may generate an electromagnetic signal in the resonant circuit of the listener 104-1 indicative of the response to be transmitted which induces an electromagnetic signal in the poller 102-1. The induced electromagnetic signal is detected by the poller 102-1 resulting in transmission of the response from the listener 104-1 to the poller 102-1.

The wireless charging system 100 may also be arranged to communicate with a near field communication (NFC) card in addition to performing the wireless charging. As a result, an NFC card 116 may be in proximity to the system 100 and store data in an NFC tag of the NFC card 116. The poller 102 of the system 100 may communicate with the NFC card 116 to read the data in the NFC tag. In an example, the communication may begin with the poller 102-1 detecting presence of the NFC card 116. In an example, the poller 102-1 may send a request to the NFC card 116 referred to as REQ(x) 120 to detect the presence of the NFC card 116. The REQ(x) may be a multi-bit message sent from the poller 102-1. In turn, the NFC card 116 in proximity to the poller 102-1 may receive the request and send a response to indicate its presence. The response may be a multi-byte sequence referred to as ATQ(x) 122. The REQ(x) 120 and ATQ(x) 122 sent between the poller 102-1 and the NFC card 116 may be defined by International Standards Organization/International Electrotechnical Commission (ISO/IEC) 14443-3, ISO/IEC1444-3 (Identification cards - Contactless integrated circuit cards) where "x" corresponds to the request and response for type A NFC card, type B NFC card, or type C NFC card. REQ(x) is generally a REQUEST Command send by the poller to detect the NFC Cards in an operating field and ATQ(x) is an Answer To Request which is transmitted by all NFC cards in an IDLE state after the REQ command. Based on the poller 102-1 determining that the NFC card 116 is in proximity to the wireless charging system 100, the NFC card 116 may communicate the data in the NFC tag to the poller 102-1.

Unlike power requirements for data exchange between the listener or NFC card 116, wireless charging requires use of a high power electromagnetic signal. Presence of the NFC card during NFC wireless charging by the NFC wireless charging system 100 poses a fire risk or overheating risk to the NFC card or system 100. To reduce this risk, the system 100 may perform a foreign object check during the wireless charging process. The foreign object check may be a process of detecting whether a foreign object before or during wireless charging is present and, in an example, the NFC card 116 present before or during wireless charging is referred to as a foreign object herein. The analog pinging to detect presence of a wireless device may also facilitate performing analog foreign object detection. The driver circuit may causes the resonant circuit of the poller 102-1 to generate an electromagnetic signal with a first magnitude and first phase which is transmitted by the antenna 106-1. If there is no NFC card 116 or interference present, the electromagnetic signal in the resonant circuit of the poller 102-1 may be substantially the first magnitude and first phase. If an NFC card 116 or interference from a poller or listener is present, the NFC card 116 or interference from a poller or listener may produce a measurable influence on the first magnitude and first phase of the electromagnetic signal in the resonant circuit to cause the electromagnetic signal to be a second magnitude and second phase due to electromagnetic coupling. If the change in magnitude and phase between the first magnitude and second magnitude and first phase and second phase is exceeds a predetermined range, then a foreign object may be present and the wireless charging may be stopped or power associated with wireless charging reduced to prevent damage to the NFC card 116 or the system 100. Further, a foreign object indicator 118 such as a light on the system 100 may be activated to indicate presence of a foreign object. But if a measured magnitude and phase does not exceed the predetermined range, then a foreign object in the form of the NFC card 116 may be not present, the wireless charging may not be stopped, and the foreign object indicator 118 not activated.

The two pollers 102-1, 102-2 and the two listeners 104-1, 104-2 of the system 100 may be collocated. In an example, poller 102-2 may produce interference 121 with poller 102-1 resulting from communication between the poller 102-2 and the listener 104-2. In another example, the two pollers 102-1, 102-2 and the two listeners 104-1, 104-2 of the system 100 may be collocated and listener 104-2 may produce interference 123 with poller 102-1 based on the listener 104-2 responding to communication from the poller 102-2. The interference which is an electromagnetic signal could couple with the resonant circuit of the poller 102-1 and result in a foreign object being detected based on the analog foreign object detection process even though no foreign object is actually present. The wireless charging may be terminated or power reduced affecting a charging efficiency. The poller 102-1 may send a signal to the charging controller 124 to terminate or reduce wireless charging power in an example.

Embodiments disclosed herein are directed to a poller 102-1 digitally distinguishing interference from another poller 102-2 or listener 104-2 compared to presence of a foreign object such as the NFC card 116 before or during wireless charging that would normally result in the wireless charging stopping or charging power being reduced. Interference from the poller 102-2 or listener 104-2 is not considered a foreign object and should not affect the wireless charging. The detection begins with the poller 102-1 performing the analog foreign detection process. Based on possible detection of a foreign object, the poller 102-1 then performs a digital foreign detection process to confirm whether a foreign object is in proximity to the poller 102-1 or the interference is caused by the listener 104-2 or the poller 102-2. A messaging based on the REQ(x) and ATQ(x) allows for distinguishing between interference from a foreign object such the NFC card 116 and interference from the poller or listener. If the messaging indicates that a foreign object is present, the poller 102-1 may stop wireless charging or reduce charging power provided to the listener 104-1. Further, the foreign object indicator 118 may be illuminated when the foreign object is detected but not illuminated when the foreign object is not detected. If the messaging indicates that a foreign object is not present and the interference is due to the poller or listener, the poller 102-1 does not cause charging to be stopped or a wireless charging power to be reduced. The indicator 118 is also not illuminated.

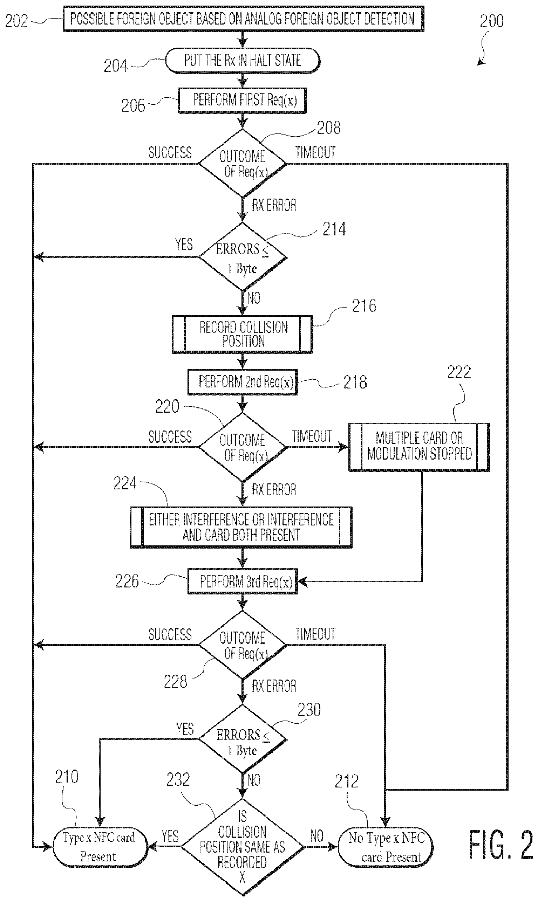

FIG. 2 is an example flow chart 200 of functions associated with polling for foreign object detection in accordance with an embodiment. The polling may be based on sending by the poller one or more requests which is REQ(x) and determining based on the sending of the requests presence or absence of a foreign object or interference from a poller or listener based on one or more responses ATQ(x). In an example, an NFC card 116 is in the form of a type A NFC card, the REQ(x) sent may be a REQ(A), and the ATQ(x) received may be ATQ(A). In another example, an NFC card 116 is in the form of a type B NFC card, the REQ(x) sent may be a REQ(B), and the ATQ(x) received may be ATQ(B). In yet another example, an NFC card 116 is in the form of a type C NFC card, the REQ(x) sent may be a REQ(C), and the ATQ(x) received may be ATQ(C). The functions of the flow chart 200 may be performed by the controller 124 one or more times with different REQ(x) and corresponding ATQ(x) before NFC wireless charging or during NFC wireless charging (e.g., in a background process) to detect presence of the three types of NFC cards. Other variations in execution of the functions may also be possible.

At 202, the poller performs an analog foreign object detection which detects a possible presence of a foreign object. In an example, the foreign object may be detected based on the poller measuring a change in magnitude and phase of the electromagnetic signal in the resonant circuit of the poller that exceeds a predefined range from the electromagnetic signal that the driver circuit of the poller caused to generate. The analog foreign object detection may not distinguish between presence of an NFC card which is a foreign object and could pose a fire or safety risk and interference from a poller or listener which is not a foreign object. At 204, a poller sends to a listener a HALT message to place the listener in a halt state to determine whether the possible presence of the foreign object is an actual foreign object or interference from another poller or listener in the system 100. For example, the poller 102-1 may send to corresponding listener 104-1 the halt message. The halt message may be a bit sequence which indicates to the listener 104-1 to not respond to a REQ(x) from the poller 102-1 (compared an IDLE state where the listener 104-1 may respond to the REQ(x)). At 206, the poller may send a request to communicate such as REQ(x). The "x" may be one the type A, type B, or type NFC request C. A determination is made of an outcome to the request at 208. The "x" may indicate one the type A NFC, type B NFC, or type C NFC associated with communication such that if REQ(A) is sent, ATQ(A) may be received, if REQ(B) is sent, ATQ(B) may be received, and if REQ(C) is sent, ATQ(C) may be received for remaining steps in the flow chart 200. In an example, the ATQ(x) may be an expected two byte bit sequence which is defined by the NFC standard but may take other sizes. If a response to the request is received by the poller is the expected bit sequence of the ATQ(x), then a foreign object in the form of an NFC card is detected at 210. If no response is received in a predefined time to the request, then the response is timed out and no foreign object in the form of the NFC card 116 is detected at 212. No response may be that no bits are received by the poller in response to the request. The wireless charging is not stopped since no foreign object is detected. If the one or bits received in response to the request is not the expected bit sequence of the ATQ(x), then at 214 a determination is made of a number of bits in error in the received bits compared to the expected bit sequence of the ATQ(x). Not all bits of the expected bit sequence of the ATQ(x) may be received correctly due to one or more of an integrity error, framing error, protocol error, or collision error. For example, if the one or more bits received is "0010 0011 0111 1111" and the expected bit sequence of the ATQ(x) is "1101 0001 0000 1011", then there may nine bits in error or more than one byte of bits in error. If one byte of bits or less are in error, then a foreign object is present at 210. It is assumed that interference from a poller or listener cannot emulate an entire byte of the ATQ(x) so presence of at least one byte of bits of the expected bit sequence of the ATQ(x) in the received bits indicates presence of a foreign object in the form of the NFC card 116. If the one or more bits received includes more than one byte of bits in error, a position of those bits which are received in error based on the expected bit sequence of the ATQ(x) are recorded at 216. In the example, the underlined bits in "0010 0011 0111 1111" may indicate the position of the bits in the received bits which are in error compared to the expected bit sequence of the ATQ(x) which is "1101 0001 0000 1011". The received bits which are not in the expected bit sequence of the ATQ(x) response may be indicative of a collision between responses from two NFC cards which respond to the request, interference by a poller or listener which may be responding to the request or transmitting an interfering signal, or interference by a poller or listener and one or more NFC cards in an example. At 216, the wireless charger has determined a presence of a NFC card or interference of a poller or listener.

At 218, the poller may send a second request which is REQ(x). The second request may be another request to detect presence of an NFC card. A determination is made of an outcome to the request at 220. If the received bits is the expected bit sequence of the ATQ(x) is received, then at 210 a foreign object in the form of an NFC card which was introduced after the processing in steps above is detected. The NFC standard may specify that if the NFC card already responded to a request it will not respond to another successive request and only respond to alternate requests. If no response is received, then there could be multiple NFC cards present which does not provide a response to the request in accordance with the NFC standard or a poller or listener which generated the interference is now stopped at 222. If one or more bits is received which is in error compared to the expected bit sequence of the ATQ(x), then at step 224, a determination is made that there could be interference from a poller or listener or interference from a poller or listener and an NFC card which was introduced after step 208 and processing continues to step 226.

In some examples, a determination may be made between steps 224 and steps 226 (not shown) whether a number of bits in error in the received bits compared to the expected bit sequence of the ATQ(x) is less than or equal to one byte. If there is one byte or less in error, then an NFC card is present and processing moves to step 210. If there is not one byte or less in error, then an NFC card is not present and processing moves to step 226.

At 226, the poller may send a third request which is REQ(x). The third request may be a request to detect presence of an NFC card. A determination is made of an outcome to the request at 228. If the one or more bits received is the expected bit sequence of the ATQ(x), then at 206, a foreign object in the form of an NFC card is detected. The NFC card may be detected in this case if other NFC cards are removed, only one NFC is present, and the NFC card which did not respond to the request at step 208 now responds. If no response is received, then at 212 no NFC card is present since it would have responded to the third request. If the one or bits received in response to the request is not the expected bit sequence of the ATQ(x), then at 230, a determination is made of a number of bits in error in the received bits compared the expected bit sequence of the ATQ(x). If the errors in the received bits is one byte of bits or less, then at 208 an NFC card is present. If the errors in the received bits greater than one byte of bits, then at 232, a determination is made of a position of those bits which are received in error compared to the expected bit sequence of the ATQ(x) and whether the position is the same as the recorded position at 216. If the position is the same as the recorded position at 216, then at 210 an NFC card is present since this means the NFC cards responded before are responding again with a same timing. For example, if the position of the bits in error is "0010 0011 0111 1111" which is the same position at 216, an NFC card is present. It is assumed that two NFC cards should cause a same collision in response to a request. The wireless charging is stopped. If the position is not the same, then at 212 no NFC card is present and the interference is produced by the poller or listener. The wireless charging is not stopped. In an example, if the NFC card is detected, then an indication may be provided to a charging controller 124 to disable wireless charging or reduce a charging power in the wireless system 100 while if an NFC card is not detected, then the wireless charging may not be affected and the wireless charging efficiency is maintained.

The embodiments described above describe that the ATQ(x) is two bytes and an NFC card is present when at least one byte of bits of the expected bit sequence of the ATQ(x) is received by the poller. If less than one byte of the two bytes of the expected bit sequence of the ATQ(x) is received, then a determination is made whether an NFC card or interference by a poller or listener is present. The number of bytes or bits used in the determination that the NFC card is present or interference by a poller or listener is present may not be limited to the described embodiments and may be considered generally a threshold number of bits. For instances, less than one byte or more than one byte of the expected bit sequence of the ATQ(x) which is received may indicate that an NFC card is present. Further, a request and response messaging other than REQ(x) and ATQ(x) with a size less than or greater than two bytes of an expected bit sequence may be used to determine presence of an NFC card.

Further in embodiments, the listener may make a determination of whether a number of bits received are not in error instead of being in error to determine whether wireless charging is to be performed. The threshold number of bits used to determine whether there is foreign object interference or interference of a poller or listener may be adjusted to correspond to the determination.

In an embodiment, a method for wireless charging by a wireless charging system is disclosed. The method comprises: halting a listener from responding to a plurality of requests for communication with a poller, wherein the poller and the listener of the system form a wireless charging pair; transmitting by the poller the plurality of requests in response to halting the communication with the listener; receiving at least one corresponding response to the plurality of requests; counting a number of bits in the received response which is in error compared an expected bit sequence of a response to a transmitted request, wherein the count is greater than one; determining whether a near field communication (NFC) card is in proximity to the wireless charger based on the count of the number of bits; and performing the wireless charging of the system based on the determination. In an example, transmitting the plurality of requests comprises transmitting a first REQ(x) defined by International Standards Organization/International Electrotechnical Commission (ISO/IEC) 14443-3 NFC standard; wherein counting the number of bits comprises determining the number of bits in a first received response which is in error compared to an expected bit sequence of an ATQ(x) response to the first REQ(x) defined by the NFC standard. In an example, the method further comprises recording a position of the bits in the expected bit sequence of the ATQ(x) response to the first REQ(x) which is in error. In an example, transmitting the plurality of requests comprises transmitting a first REQ(x) defined by ISO/IEC 14443-3 NFC standard; wherein counting the number of bits comprises determining the number of bits in a first received response which is in error compared to an expected bit sequence of an ATQ(x) response to the first REQ(x) defined by the NFC standard is greater than a threshold number of bits, and wherein performing the wireless charging comprises stopping the wireless charging. In an example, "x" indicates a request and response which corresponds to one of a type A NFC card, type B NFC card, or type C NFC card defined by ISO/IEC 14443-3 NFC standard. In an example, transmitting the plurality of requests comprises transmitting a first REQ(x) followed by a second REQ(x) defined by ISO/IEC 14443-3 NFC standard; wherein counting the number of bits comprises determining a number of bits in each of a first and second received responses which is in error compared to a respective expected bit sequence of a first and second ATQ(x) response to the first and second REQ(x) is greater than a threshold number of bits. In an example, transmitting the plurality of requests comprises transmitting a third REQ(x) after the second REQ(x), and wherein counting the number of bits comprises determining the number of bits in a third received response which is in error compared to an expected bit sequence of an ATQ(x) response to the third REQ(x) is greater than the threshold number of bits, and wherein performing the wireless charging comprises not stopping the charging. In an example, transmitting the plurality of requests comprises transmitting a third REQ(x) after the second REQ(x); wherein counting the number of bits comprises determining the number of bits in a third received response which is in error compared to an expected bit sequence of an ATQ(x) response to the third REQ(x) is less than the threshold number of bits, and wherein performing the wireless charging comprises stopping the wireless charging. In an example, transmitting the plurality of requests comprises transmitting a third REQ(x) after the second REQ(x); wherein counting the number of bits comprises determining the number of bits in a third received response which is in error compared to an expected bit sequence of an ATQ(x) response to the third REQ(x) is greater than the threshold number of bits and determining a position of the bits which is errored in the third received response compared to the expected bit sequence of the ATQ(x) response to the third REQ(x) wherein adjusting the wireless charging comprises stopping the wireless charging based on the position of the bits which is errored in the third received response being the same as a position of bits which is errored in the first received response to the first REQ(x) compared to an expected bit sequence of the ATQ(x) response to the first REQ(x). In an example, performing the wireless charging comprises reducing a wireless charging power or stopping the wireless charging, wherein the wireless charging is based on Wireless Charging Technical Specification Version 2.0 defined by NFC Forum.

In another embodiment, a wireless charging system is disclosed. The system comprises: a poller; a listener, wherein the listener and the poller forms a wireless charging pair; wherein the poller is arranged to halt the listener from responding to a plurality of requests for communication with the poller, wherein the poller and the listener of the system form a wireless charging pair; transmit by the poller the plurality of requests in response to halting the communication with the listener; receive at least one corresponding response to the plurality of requests; compare bits of a received response with an expected bit sequence of a response to a transmitted request; count a number of bits in the received response which is in error compared the expected bit sequence of a response to the transmitted request, wherein the count is greater than one; determine whether a NFC card is in proximity to the wireless charger based on the count of the number of bits; and perform the wireless charging of the system based on the determination. In an example, the poller arranged to transmit the plurality of requests comprises the poller arranged to transmit a first REQ(x) defined by ISO/IEC 14443-3 NFC standard; wherein the poller arranged to count a number of bits comprises the poller arranged to determine the number of bits in a first received response which is in error compared to an expected bit sequence of an ATQ(x) response to the first REQ(x) defined by the NFC standard. In an example, the system further comprises recording a position of the bits in the expected bit sequence of the ATQ(x) response to the first REQ(x) which is in error. In an example, the poller arranged to transmit the plurality of requests comprises the poller arranged to transmit a first REQ(x) defined by ISO/IEC 14443-3 NFC standard; wherein the poller arranged to count a number of bits comprises the poller arranged to determine the number of bits in a first received response which is in error compared to an expected bit sequence of an ATQ(x) response to the first REQ(x) defined by the NFC standard is less than a threshold number of bits, and wherein the poller arranged to perform the wireless charging comprises the poller arranged to stop the wireless charging. In an example, "x" indicates a request and response which corresponds to one of a type A NFC card, type B NFC card, or type C NFC card defined by ISO/IEC 14443-3 NFC standard. In an example, the poller arranged to transmit the plurality of requests comprises the poller arranged to transmit a first REQ(x) followed by a second REQ(x) defined by ISO/IEC 14443-3 NFC standard; wherein the poller arranged to count the number of bits comprises the poller arranged to determine a number of bits in each of a first and second received responses which is in error compared to a respective expected bit sequence of a first and second ATQ(x) response to the first and second REQ(x) is greater than a threshold number of bits. In an example, the poller arranged to transmit the plurality of requests comprises the poller arranged to transmit a third REQ(x) after the second REQ(x), and wherein the poller arranged to count the number of bits comprises the poller arranged to determine the number of bits comprises determining the number of bits in a third received response which is in error compared to an expected bit sequence of an ATQ(x) response to the third REQ(x) is greater than the threshold number of bits; and wherein the poller arranged to perform the wireless charging comprises the poller arranged to not stop the charging. In an example, the poller arranged to transmit the plurality of requests comprises the poller arranged to transmit a third REQ(x) after the second REQ(x); wherein the poller arranged to count the number of bits comprises the poller arranged to determine the number of bits in a third received response which is in error compared to expected bit sequence of an ATQ(x) response to the third REQ(x) is less than the threshold number of bits, and wherein the poller arranged to perform the wireless charging comprises the poller arranged to stop the wireless charging. In an example, the poller is arranged to transmit the plurality of requests comprises the poller arranged to transmit a third REQ(x) after the second REQ(x); wherein the poller arranged to count the number of bits comprises the poller arranged to determine the number of bits in a third received response which is in error compared to an expected bit sequence of an ATQ(x) response to the third REQ(x) is greater than the threshold number of bits and determining a position of the bits which is errored in the third received response compared to the expected bit sequence of the ATQ(x) response to the third REQ(x); wherein the poller arranged to perform the wireless charging comprises the poller arranged to stop the wireless charging based on the position of the bits which is errored in the third received response being the same as a position of bits which is errored in the first received response to the first REQ(x) compared to an expected bit sequence of the ATQ(x) response to the first REQ(x). In an example, the poller arranged to perform the wireless charging comprises one of the poller arranged to reduce a wireless charging power and stop the wireless charging, wherein the wireless charging is based on Wireless Charging Technical Specification Version 2.0 defined by NFC Forum.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of' preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

Other implementations fall within the scope of the following claims.

## Claims

1. A method for wireless charging by a wireless charging system, the method comprising:
halting a listener from responding to a plurality of requests for communication with a poller, wherein the poller and the listener of the system form a wireless charging pair;
transmitting by the poller the plurality of requests in response to halting the communication with the listener;
receiving at least one corresponding response to the plurality of requests;
counting a number of bits in the received response which is in error compared an expected bit sequence of a response to a transmitted request, wherein the count is greater than one;
determining whether a near field communication (NFC) card is in proximity to the wireless charger based on the count of the number of bits; and
performing the wireless charging of the system based on the determination.

2. The method of claim 1, wherein transmitting the plurality of requests comprises transmitting a first REQ(x) defined by International Standards Organization/International Electrotechnical Commission (ISO/IEC) 14443-3 NFC standard; wherein counting the number of bits comprises determining the number of bits in a first received response which is in error compared to an expected bit sequence of an ATQ(x) response to the first REQ(x) defined by the NFC standard.

3. The method of claim 2, further comprising recording a position of the bits in the expected bit sequence of the ATQ(x) response to the first REQ(x) which is in error.

4. The method of any preceding claim, wherein transmitting the plurality of requests comprises transmitting a first REQ(x) defined by ISO/IEC 14443-3 NFC standard; wherein counting the number of bits comprises determining the number of bits in a first received response which is in error compared to an expected bit sequence of an ATQ(x) response to the first REQ(x) defined by the NFC standard is greater than a threshold number of bits, and wherein performing the wireless charging comprises stopping the wireless charging.

5. The method of claim 4, wherein "x" indicates a request and response which corresponds to one of a type A NFC card, type B NFC card, or type C NFC card defined by ISO/IEC 14443-3 NFC standard.

6. The method of any preceding claim, wherein transmitting the plurality of requests comprises transmitting a first REQ(x) followed by a second REQ(x) defined by ISO14443-3 NFC standard; wherein counting the number of bits comprises determining a number of bits in each of a first and second received responses which is in error compared to a respective expected bit sequence of a first and second ATQ(x) response to the first and second REQ(x) is greater than a threshold number of bits.

7. The method of claim 6, wherein transmitting the plurality of requests comprises transmitting a third REQ(x) after the second REQ(x), and wherein counting the number of bits comprises determining the number of bits in a third received response which is in error compared to an expected bit sequence of an ATQ(x) response to the third REQ(x) is greater than the threshold number of bits, and wherein performing the wireless charging comprises not stopping the charging.

8. The method of claim 6 or 7, wherein transmitting the plurality of requests comprises transmitting a third REQ(x) after the second REQ(x); wherein counting the number of bits comprises determining the number of bits in a third received response which is in error compared to an expected bit sequence of an ATQ(x) response to the third REQ(x) is less than the threshold number of bits, and wherein performing the wireless charging comprises stopping the wireless charging.

9. The method of any one of claims 6 to 8, wherein transmitting the plurality of requests comprises transmitting a third REQ(x) after the second REQ(x); wherein counting the number of bits comprises determining the number of bits in a third received response which is in error compared to an expected bit sequence of an ATQ(x) response to the third REQ(x) is greater than the threshold number of bits and determining a position of the bits which is errored in the third received response compared to the expected bit sequence of the ATQ(x) response to the third REQ(x), wherein adjusting the wireless charging comprises stopping the wireless charging based on the position of the bits which is errored in the third received response being the same as a position of bits which is errored in the first received response to the first REQ(x) compared to an expected bit sequence of the ATQ(x) response to the first REQ(x).

10. The method of any preceding claim, wherein performing the wireless charging comprises reducing a wireless charging power or stopping the wireless charging, wherein the wireless charging is based on Wireless Charging Technical Specification Version 2.0 defined by NFC Forum.

11. A wireless charging system comprising:
a poller;
a listener, wherein the listener and the poller forms a wireless charging pair;
wherein the poller is arranged to halt the listener from responding to a plurality of requests for communication with the poller, wherein the poller and the listener of the system form a wireless charging pair; transmit by the poller the plurality of requests in response to halting the communication with the listener; receive at least one corresponding response to the plurality of requests; compare bits of a received response with an expected bit sequence of a response to a transmitted request; count a number of bits in the received response which is in error compared the expected bit sequence of a response to the transmitted request, wherein the count is greater than one; determine whether a NFC card is in proximity to the wireless charger based on the count of the number of bits; and perform the wireless charging of the system based on the determination.

12. The system of claim 11, wherein the poller arranged to transmit the plurality of requests comprises the poller arranged to transmit a first REQ(x) defined by ISO/IEC 14443-3 NFC standard; wherein the poller arranged to count a number of bits comprises the poller arranged to determine the number of bits in a first received response which is in error compared to an expected bit sequence of an ATQ(x) response to the first REQ(x) defined by the NFC standard.

13. The system of claim 11 or 12, further comprising recording a position of the bits in the expected bit sequence of the ATQ(x) response to the first REQ(x) which is in error.

14. The system of any one of claims 11 to 13, wherein the poller arranged to transmit the plurality of requests comprises the poller arranged to transmit a first REQ(x) defined by ISO/IEC 14443-3 NFC standard; wherein the poller arranged to count a number of bits comprises the poller arranged to determine the number of bits in a first received response which is in error compared to an expected bit sequence of an ATQ(x) response to the first REQ(x) defined by the NFC standard is less than a threshold number of bits, and wherein the poller arranged to perform the wireless charging comprises the poller arranged to stop the wireless charging.

15. The system of claim 14, wherein "x" indicates a request and response which corresponds to one of a type A NFC card, type B NFC card, or type C NFC card defined by ISO/IEC 14443-3 NFC standard.
